# EUROPÄISCHE PATENTSCHRIFT

(11) **EP 2 732 254 B1**
(45) Veröffentlichungstag und Bekanntmachung des Hinweises auf die Patenterteilung: **16.03.2016**
(21) Anmeldenummer: 12733697.2
(22) Anmeldetag: 06.07.2012
(51) Int. Cl.: G01K 1/12

(54) **HOCHTEMPERATURMESSSENSORANORDNUNG**
HIGH-TEMPERATURE MEASURING SENSOR ASSEMBLY
DISPOSITIF CAPTEUR DE MESURE HAUTE TEMPÉRATURE

(30) Priorität: 11.07.2011 DE 102011107045; 08.09.2011 DE 102011112876
(43) Veröffentlichungstag der Anmeldung: 21.05.2014
(73) Patentinhaber: Tesona GmbH & Co. KG, 99819 Hörselberg/Hainich (DE)
(72) Erfinder: LANTZSCH, Heiko, 99817 Eisenach (DE); BLUM, Hendrik, 98587 Steinbach-Hallenberg (DE)
(74) Vertreter: Kruspig, Volkmar
(86) Internationale Anmeldenummer: PCT/EP2012/063285
(87) Internationale Veröffentlichungsnummer: WO 2013/007648

(56) Entgegenhaltungen:
- WO-A1-2010/063682
- US-A- 4 485 263
- US-A- 4 984 904

## Beschreibung

Die Erfindung betrifft eine Hochtemperaturmesssensoranordnung, umfassend ein in einem Schutzrohr gelagertes Sensorelement mit am Ende des Schutzrohrs freiliegender, zur heißen Seite orientierten Messperle und gegenüberliegenden, zur kalten Seite zeigenden Anschlüssen, weiterhin mit einer die Messperle umgebenden, mit dem Schutzrohr verbundenen Schutzkappe und einer äußeren Stabilisierungs- und Befestigungshülse gemäß Patentanspruch 1.

Aus der WO 2010/063682 A1 ist ein Temperaturfühler mit einem Thermoelement vorbekannt, der eine hitzebeständige Mantelleitung aufweist, an dessen dem Messmedium zugewandten Ende ein Sensorelement angeordnet ist. Durch ein Metallrohr der Mantelleitung sind elektrische Anschlussleitungen für den Anschluss des Sensorelements an eine elektronische Auswerteeinheit geführt. Der gezeigte Temperaturfühler soll bis zu Temperaturen von 1200°C einsatzfähig sein und schnelle Temperaturänderungen erfassen können. Hierfür besteht das Sensorelement aus einer Thermodrahtperle, die aus der Mantelleitung herausragt und von einer Schutzhülse aufgenommen ist, welche auf dem dem Messmedium zugewandten Ende der Mantelleitung befestigt ist. Die Schutzhülse weist ein einteiliges Vorderteil ohne Schweißstellen auf und die Mantelleitung ist ein flexibles, dünnwandiges Metallrohr mit einem geringen Außendurchmesser, an dessen dem Messmedium abgewandten Bereich Anschlussdrähte herausgeführt sind, die die gewünschte Verbindung zur Bordelektronik herstellen.

Aus der gattungsbildenden EP 2 196 787 A2 ist ein Hochtemperatursensor mit einem Sensorelement vorbekannt, das in einem Schutzrohr gelagert ist. Um auch im Umfeld hoher Temperaturen, z.B. im Abgasstrang eines Kraftfahrzeugs zuverlässige Messungen durchzuführen, ist das Schutzrohr von einem Versteifungsrohr umgeben, wobei das Versteifungsrohr aus einem Material besteht, dessen Wärmeausdehnungskoeffizient höher ist als der des Materials, aus dem das Schutzrohr besteht. Das Versteifungsrohr ist einem ersten Bereich des Schutzrohrs mit dem Schutzrohr fest verbunden und in einem zweiten Bereich des Schutzrohrs befindet sich ein Anschlagelement, das ebenfalls fest mit dem Schutzrohr verbunden ist. Das Versteifungsrohr tritt aufgrund seiner höheren Wärmedehnung ab einer vorgegebenen Temperatur in mechanischen Kontakt mit dem Anschlagelement, wodurch der Hochtemperatursensor ab dieser Temperatur mechanisch stabilisierbar ist. Der Raum zwischen dem Sensorelement und der Schutzrohrkappe ist nach EP 2 196 787 A2 mit einem gut wärmeleitenden Material gefüllt. Hierfür kann feines Siliziumpulver zur Anwendung kommen. Das stabilisierende, mechanische Inkontaktkommen des Schutzrohrs mit dem Anschlagelement erfordert eine Mindesttemperatur, so dass insbesondere unmittelbar in der Startphase bzw. im Nicht-Hochleistungsbetrieb die Gesamtanordnung zu Schwingungen neigt, die die Zuverlässigkeit der Messanordnung gefährden.

Zum Stand der Technik sei noch auf die EP 2 128 578 A1 sowie die EP 2 410 306 A2 aufmerksam gemacht, welche gattungsbildende Hochtemperaturmesssensoranordnungen zeigen.

Aus dem Vorgenannten ist es daher Aufgabe der Erfindung, eine weiterentwickelte Hochtemperaturmesssensoranordnung anzugeben, welche von einem in einem Schutzrohr gelagerten Sensorelement ausgeht und wobei am Ende des Schutzrohrs, zur heißen Seite orientiert eine Messperle, insbesondere eine Thermoelement-Messperle befindlich ist. Die anzugebende Hochtemperaturmesssensoranordnung soll kostengünstig herstellbar sein und über eine hohe Langzeitstabilität mit geringer Ausfallrate verfügen. Weiterhin gilt es dafür Sorge zu tragen, dass ein sehr schnelles Ansprechen des Sensorelements erfolgen kann, um einen optimalen Betrieb eines entsprechend ausgerüsteten Kraftfahrzeugs bzw. Kraftfahrzeugmotors, eines Turboladers oder eines stationären Motors sicherzustellen.

Die Lösung der Aufgabe der Erfindung erfolgt mit der Merkmalskombination nach Patentanspruch 1, wobei die Unteransprüche mindestens zweckmäßige Ausgestaltungen und Weiterbildungen umfassen.

Es wird demnach von einer Hochtemperaturmesssensoranordnung, umfassend ein in einem Schutzrohr gelagertes Sensorelement mit am Ende des Schutzrohrs freiliegender, zur heißen Seite orientierten Messperle und gegenüberliegenden, zur kalten Seite zeigenden Anschlüssen ausgegangen. Weiterhin ist eine die Messperle umgebende, mit dem Schutzrohr verbundene oder verbindbare Schutzkappe und eine äußere Stabilisierungs- und Befestigungshülse vorhanden.

Erfindungsgemäß steht die äußere Stabilisierungs- und Befestigungshülse an ihrem zur Schutzkappe weisenden Ende mit einem Konturkörper, der ebenfalls hülsenförmig ausgebildet sein, in Kontakt, welcher aus einem hochwertigen, temperaturstabilen, metallischen Material besteht. Der Konturkörper überfängt erfindungsgemäß die Schutzkappe, welche aus einem weniger kostenintensiven Material gefertigt sein kann. Dieses Überfangen geschieht einerseits bezogen auf die Längsachse der Gesamtanordnung, so dass ein Stabilisieren gegenüber Schwingungskräften erfolgt. Andererseits ist das Überfangen als Fügeverbindung zwischen Konturkörper und äußerer Stabilisierungs- und Befestigungshülse derart realisiert, dass thermisch bedingte Ausdehnungen in Längsachsenrichtung aufgenommen werden. Die Fügung zwischen den vorerwähnten Elementen bleibt jedoch über den gesamten Bereich der thermischen Ausdehnung in Längsachsenrichtung der Gesamtanordnung erhalten, so dass grundsätzlich die gewünschte mechanische Stabilisierung und das Schwingungsfreihalten der Messperle gewährleistet ist.

Bevorzugt wir die Fügeverbindung über die gegenüberliegenden Mantelflächen der vorerwähnten Elemente realisiert.

Die Fügeverbindung ermöglicht erfindungsgemäß ein Gleiten zwischen Schutzkappe und der Innenwandung des Konturkörpers und/oder der Außenwandung des Konturkörpers und der Stabilisierungs- und Befestigungshülse.

Zum Ausbilden der Fügeverbindung weist der Konturkörper bei einer bevorzugten Ausgestaltung radial umfangsseitig, bevorzugt in Längsachsenrichtung verlaufende Vor- und Rücksprünge auf.

Zum Zutritt des zu messenden Mediums kann der Konturkörper Öffnungen, z.B. schlitzförmige Öffnungen umfassen.

Die Schutzkappe weist bei einer Ausgestaltung einen im Wesentlichen zylindrischen Endabschnitt auf, welcher in einen komplementären, zylindrischen Endabschnitt des Konturkörpers eintaucht, was eine weitere mechanische Stabilisierung der Gesamtanordnung bewirkt.

Wenn die jeweiligen zylindrischen Endabschnitte einen reduzierten Durchmesser aufweisen, ergibt sich eine minimierte Wärmekapazität insbesondere im Bereich der Messperle, was ein schnelleres Ansprechen der Gesamtanordnung bei Temperaturänderungen zur Folge hat.

Gemäß einem weiteren erfindungsgemäßen Ansatz weist die Schutzkappe eine Füllung aus einem schwingungsstabilisierenden, wärmeleitfähigen, bevorzugt pulverförmigen Material auf.

Dabei wird die Füllung bevorzugt unter Anwendung von Ultraschall eingerüttelt, und zwar dann, wenn die Messperle bereits in die Schutzkappe eintaucht bzw. von dieser umgeben ist. Hierbei ergibt sich eine reproduzierbare Verdichtung des Füllmaterials, ohne dass störende Kräfte auf die Messperle bzw. die Anschlussdrähte, die zur Messperle führen, wirksam werden. Die Verdichtung der Füllung erfolgt also ohne äußere Krafteinwirkung, wie z.B. Druckverformung der Schutzkappe.

Die Füllung kann auch als Schichtfüllung ausgebildet werden. Hierbei besteht die Füllung mindestens aus zwei senkrecht zur Längsachsenrichtung verlaufende Schichten, wobei eine erste, die Messperle umgebende Schicht eine sehr hohe Wärmeleitfähigkeit und eine zweite, von der Messperle weg weisende Schicht eine reduzierte Wärmeleitfähigkeit besitzt.

Damit wird eine unerwünschte Wärmeabfuhr in Richtung kaltes Ende der Gesamtanordnung verringert bzw. die Wärmeleitung in diese Richtung reduziert, was bei Hochtemperaturanwendungen von besonderem Vorteil ist.

Bei einer bevorzugten Ausgestaltung weist das Füllmaterial Bornitrid-Partikel auf oder besteht aus selbigem Bornitrid-Partikeln. Durch gezieltes Ausrichten der Bornitrid-Partikel beim Füllprozess oder unmittelbar im Anschluss an den Füllvorgang lässt sich die Richtung der Wärmeleitung zur Messperle hin einstellen. Dabei kann dafür gesorgt werden, dass der Wärmetransport senkrecht zur Längsachsenrichtung der Gesamtanordnung verbessert; hingegen in Längsachsenrichtung, d.h. zur kalten Seite hin reduziert wird. Die Abdichtung an der kalten Seite der erfindungsgemäßen Gesamtanordnung kann durch Einblasen oder Vergießen mit einem selbsthärtenden Material vorgenommen werden.

Gemäß dem Grundgedanken der Erfindung kann das Material der Schutzkappe allein mit Blick auf die Aufnahme der Füllung und der geringsten Schwingungsstabilisierung der Messperle ausgewählt werden. Eine extreme Beständigkeit hinsichtlich des Abgasstroms und bezogen auf das Material der Schutzkappe ist nicht erforderlich. Hingegen wird das Material des Konturkörpers bezogen auf die thermische Belastung und den aggressiven Abgasstrom ausgewählt oder optimiert, wobei der Konturkörper die Schutzkappe abschnittsweise mechanisch führt und stabilisiert und darüber hinaus in der Lage ist, durch die Gleit-Fügung in Längsachsenrichtung auftretende, temperaturbedingte Kräfte aufzunehmen, und zwar ohne die gewünschte mechanische Stabilisierungsfunktion zu gefährden. Die Führung kann über die Gestaltung der jeweils gegenüberliegenden Mantelflächen der diesbezüglich relevanten Komponenten erfolgen, indem komplementäre Vor- und Rücksprünge vorhanden sind, die quasi verzahnungsartig ineinander greifen, jedoch unter Beibehaltung der gewünschten Längsverschieblichkeit.

In an sich bekannter Weise besteht die Möglichkeit, an der äußeren Stabilisierungs- und Befestigungshülse einen Flansch, bevorzugt durch Verschweißen, zu befestigen, wobei der Flansch dem Fixieren der Hoch-temperaturmesssensoranordnung am Messort dient. Dabei liegt es im Sinne der Erfindung, den Flansch selbst als thermische Blende auszuführen oder am Flansch zusätzliche strahlungsschirmende Elemente anzuordnen, um nachgeordnete, insbesondere elektronische Baugruppen oder Anschlusselemente vor einer unnötigen thermischen Einwirkung zu schützen.

Die Erfindung soll nachstehend anhand eines Ausführungsbeispiels sowie unter Zuhilfenahme von Figuren näher erläutert werden.

Hierbei zeigen:
- Fig. 1a: eine Ansicht einer ersten Ausführungsform einer Hochtemperaturmesssensoranordnung mit schlitzförmigen Öffnungen im Bereich des die Schutzkappe umgebenden Konturkörpers;
- Fig. 1b: eine Schnittdarstellung der Hochtemperaturmesssensoranordnung nach Fig. 1a;
- Fig. 1c: eine Schnittdarstellung des Details B gemäß Fig. 1b;
- Fig. 1d: eine Explosionsansicht der wesentlichsten Baugruppen der Hochtemperaturmesssensoranordnung gemäß Ausführungsbeispielen nach Fig. 1a bis 1c;
- Fig. 2a: eine zweite Ausführungsform der Hochtemperaturmesssensoranordnung mit geschlossenem messseitigen Ende;
- Fig. 2b: eine Schnittdarstellung der Hochtemperaturmesssensoranordnung nach Fig. 2a;
- Fig. 2c: eine Darstellung des Details B nach Fig. 2b im Längsschnitt,
- Fig. 2d: eine Explosionsansicht der wesentlichsten Baugruppen des zweiten Ausführungsbeispiels gemäß den Fig. 2a bis 2c und
- Fig. 3: eine Längsschnittdarstellung eines weiteren Ausführungsbeispiels,

Bei der nachstehenden Erläuterung der Ausführungsbeispiele werden für gleiche oder gleichwirkende Elemente dieselben Bezugszeichen verwendet.

Die erfindungsgemäße Hochtemperaturmesssensoranordnung geht von einem in einem Schutzrohr 1 gelagerten Sensorelement aus, wobei an einem Ende des Schutzrohrs, zur heißen Seite orientiert eine Messperle 2 vorhanden ist. Zur kalten Seite hin sind Anschlussdrähte 3 vorhanden.

Weiterhin ist eine die Messperle 2 umgebende Schutzkappe 4 vorhanden, wobei die Schutzkappe 4 mit dem Schutzrohr 1 z.B. stoffschlüssig verbindbar ist.

Die vorstehend beschriebene Anordnung ist noch von einer äußeren Stabilisierungs- und Befestigungshülse 5 umgeben. Außenseitig ist an der Stabilisierungs- und Befestigungshülse 5 ein Flansch 6 fixiert, der der Befestigung der Hochtemperaturmesssensoranordnung am Messort, z.B. im Abgaskanal eines Kraftfahrzeugmotors dient.

Erfindungsgemäß steht die äußere Stabilisierungs- und Befestigungshülse 5 an ihrem zur Schutzkappe 4 weisende Ende mit einem Konturkörper 7 in Kontakt, welcher aus einem hochwertigen, temperaturstabilen metallischen Material besteht.

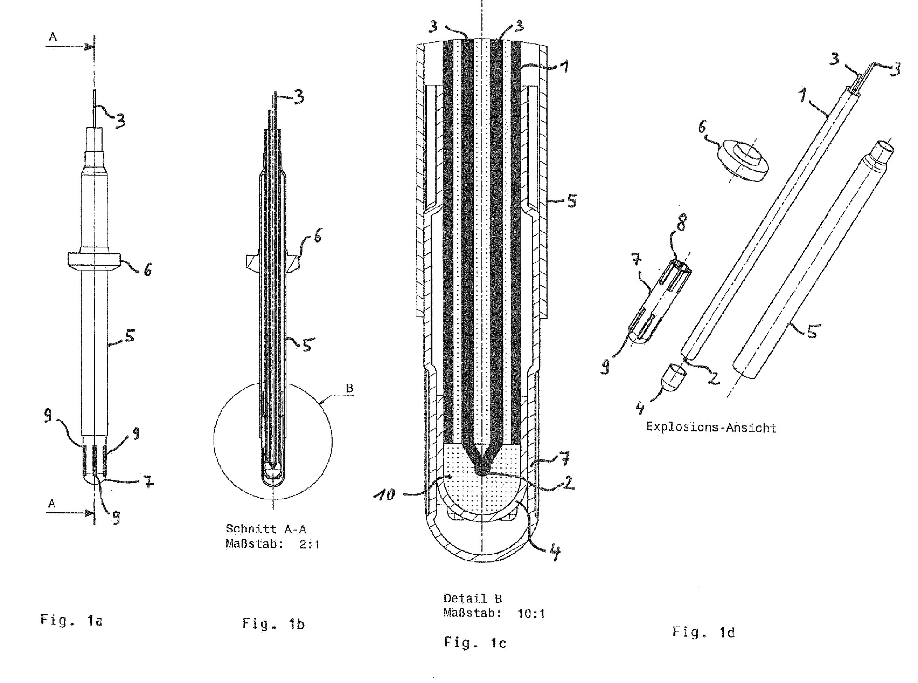

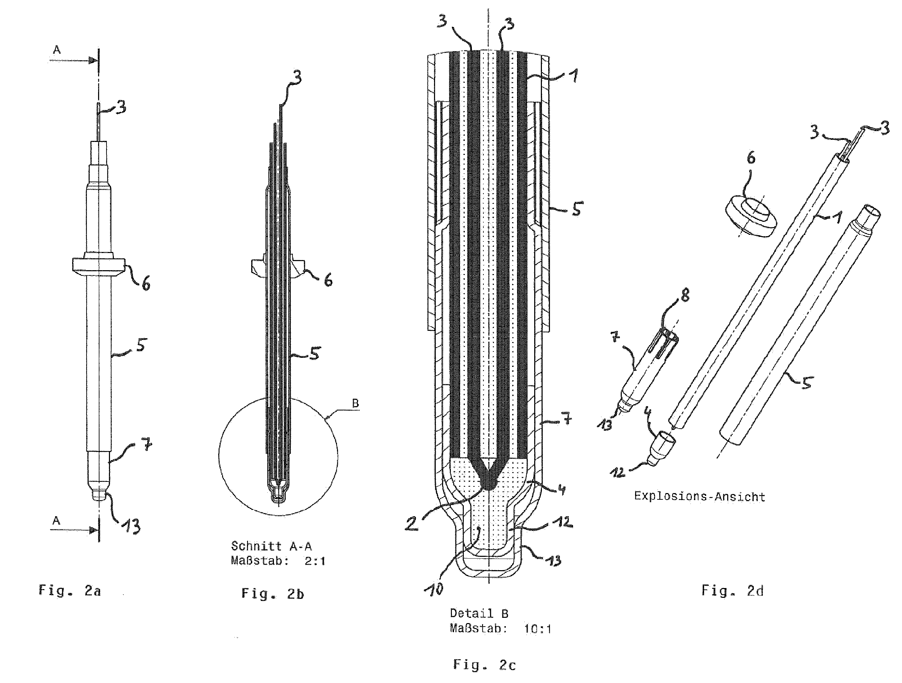

Der Konturkörper 7 überfängt dabei die Schutzkappe 4, wie aus der Detaildarstellung nach Fig. 1c bzw. 2c ersichtlich ist.

Aus den Darstellungen gemäß den Fig. 1c und 2c ist auch ersichtlich, dass die Fügeverbindung der vorerwähnten Elemente über die gegenüberliegenden Mantelflächen realisierbar ist.

Die Fügeverbindung ermöglicht ein Gleiten zwischen Schutzkappe 4 und der Innenwandung des Konturkörpers 7 und/oder der Außenwandung des Konturkörpers 7 und der Stabilisierungs- und Befestigungshülse 5.

Aus der Explosionsansicht nach Fig. 1d in Verbindung mit der Darstellung nach Fig. 1a ist nachvollziehbar, dass der Konturkörper 7 radial umfangsseitig Vor- und Rücksprünge 8 aufweist, die z.B. durch Verformen oder einen Prägeschritt ausbildbar sind.

Weiterhin besitzt der Konturkörper 7 nach den Darstellungen gemäß Fig. 1a bis 1d schlitzförmige Öffnungen 9 zum Zutritt des zu messenden Mediums, z.B. des Abgasstroms eines Kraftfahrzeugmotors.

Die Schutzkappe 4 ist gemäß Ausführungsbeispiel mit einem Füllmaterial 10 versehen, welches die Messperle 2 stabilisiert und gleichzeitig aufgrund ausreichender wärmeleitfähiger Eigenschaften für eine schnelle ungehinderte Ausbreitung der Wärmeenergie hin zur Messperle 2 sorgt.

Die Füllung kann einschichtig, aber auch mehrschichtig, insbesondere zweischichtig realisiert werden. Bei einer zweischichtigen Ausführungsform sind diese Schichten senkrecht zur Längsachsenrichtung verlaufend, wobei eine erste, die Messperle 2 umgebende Schicht eine höhere Wärmeleitfähigkeit als eine zweite, von der Messperle weg weisende Schicht besitzt. Hierdurch wird die an sich unerwünschte Ausbreitung thermischen Energie zur kalten Seite hin reduziert.

Bei dem Ausführungsbeispiel der Hochtemperaturmesssensoranordnung nach den Fig. 2a bis 2d weist die Schutzkappe 4 einen zylindrischen Endabschnitt 12 auf.

Dieser zylindrische Endabschnitt 12 ist im Wesentlichen komplementär einem zylindrischen Endabschnitt 13 des Konturkörpers 7.

Wie aus der Fig. 2c ersichtlich, nimmt damit das Innenvolumen des zylindrischen Endabschnitts 13 den zylindrischen Endabschnitt 12 der Schutzkappe 4 führend und stabilisierend auf.

Durch die Durchmesserreduzierung im Bereich der Endabschnitte 12 und 13 ergibt sich ein Raum mit reduzierter Wärmekapazität, was zu einem verbesserten Ansprechvermögen der Gesamtanordnung führt.

Das Füllmaterial 10 kann Bornitrid enthalten oder aus bevorzugt pulverförmigem Bornitrid-Material bestehen. Durch ein gezieltes Ausrichten der Bornitrid-Partikel beim Füllprozess oder unmittelbar danach kann die Richtung der Wärmeleitung zur Messperle hin eingestellt werden. Dabei erfolgt die Richtungsorientierung derart, dass ausgehend vom einwirkenden Abgasstrom eine optimale Wärmeleitfähigkeit hin zur Messperle vorliegt, jedoch in Längsachsenrichtung zur kalten Seite hin die Wärmeleitung reduziert ist.

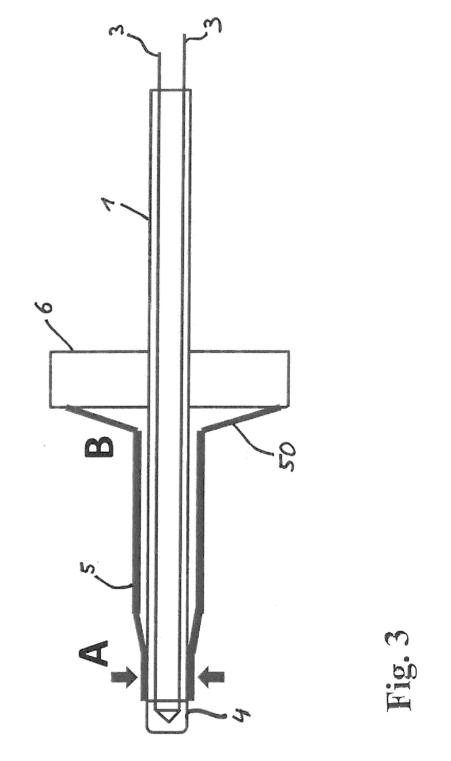

Bei der Weiterbildung der Erfindung gemäß Ausführungsform nach Fig. 3, die eine Prinzipschnittdarstellung der Sensoranordnung zeigt, kann die Stabilisierungs- und Befestigungshülse 5 bezüglich des Flansches 6 auch nicht durchgängig, sondern als verkürzte Stützhülse ausgeführt werden.

Im mit A gekennzeichneten Bereich besteht die Möglichkeit, die verkürzte Stützhülse 5 durch Verpressen am Schutzrohr 1 und/oder einer angedeuteten Kappe 4 zu verpressen.

Am zum Flansch 6 weisenden Ende verfügt die Stützhülse 5 über einen Kragen 50, der zum Rohrteil der Stützhülse 5 in einem Winkel von >90° verläuft.

Beim Einbau einer so ausgeführten Anordnung legt sich diese im Bereich B ähnlich einer Federscheibe oder einer nachgiebigen Dichtung an. Gleichzeitig wird die Stützhülse 5 unter Nutzung des Flansches 6, der mit einer nicht gezeigten Schraubhülse einen Druckbund bildet, stabilisiert.

## Patentansprüche

1. Hochtemperaturmesssensoranordnung, umfassend ein in einem Schutzrohr (1) gelagertes Sensorelement mit am Ende des Schutzrohrs (1) freiliegender, zur heißen Seite orientierten Messperle (2) und gegenüberliegenden, zur kalten Seite zeigenden Anschlüssen, weiterhin mit einer die Messperle (2) umgebenden, mit dem Schutzrohr (1) verbundenen Schutzkappe (4) und einer äußeren Stabilisierungs- und Befestigungshülse (5), **dadurch gekennzeichnet, dass** die äußere Stabilisierungs- und Befestigungshülse (5) an ihrem zur Schutzkappe weisenden Ende mit einem Konturkörper (7) in Kontakt steht, welcher aus einem hochwertigen, temperaturstabilen metallischen Material besteht, wobei der Konturkörper (7) die Schutzkappe (4) überfängt und einerseits gegen Schwingungskräfte stabilisiert sowie andererseits durch Fügeverbindung zwischen Konturkörper (7) und äußerer Stabilisierungs- und Befestigungshülse (5) thermisch bedingte Ausdehnungen in Längsachsenrichtung aufgenommen werden.

2. Hochtemperaturmesssensoranordnung nach Anspruch 1,
**dadurch gekennzeichnet, dass**
die Fügeverbindung über die gegenüberliegenden Mantelflächen realisiert ist.

3. Hochtemperaturmesssensoranordnung nach Anspruch 1 oder 2,
**dadurch gekennzeichnet, dass**
die Fügeverbindung ein Gleiten zwischen Schutzkappe und der Innenwandung des Konturkörpers und/oder der Außenwandung des Konturkörpers und der Stabilisierungs- und Befestigungshülse ermöglicht.

4. Hochtemperaturmesssensoranordnung nach einem der vorangegangenen Ansprüche,
**dadurch gekennzeichnet, dass**
der Konturkörper radial umfangsseitig oder axial umfangsseitig Vor- und Rücksprünge aufweist.

5. Hochtemperaturmesssensoranordnung nach einem der vorangegangenen Ansprüche,
**dadurch gekennzeichnet, dass**
der Konturkörper Öffnungen zum Zutritt des zu messenden Mediums aufweist.

6. Hochtemperaturmesssensoranordnung nach einem der vorangegangenen Ansprüche,
**dadurch gekennzeichnet, dass**
die Schutzkappe einen im Wesentlichen zylindrischen Endabschnitt aufweist, welcher in einen komplementären zylindrischen Endabschnitt des Konturkörpers eintaucht.

7. Hochtemperaturmesssensoranordnung nach Anspruch 6,
**dadurch gekennzeichnet, dass**
die jeweiligen zylindrischen Endabschnitte einen reduzierten Durchmesser mit minimierter Wärmekapazität besitzen.

8. Hochtemperaturmesssensoranordnung nach einem der vorangegangenen Ansprüche,
**dadurch gekennzeichnet, dass**
die Schutzkappe eine Füllung aus einem schwingungsstabilisierenden, wärmeleitfähigen, bevorzugt pulverförmigen Material aufweist.

9. Hochtemperaturmesssensoranordnung nach Anspruch 8,
**dadurch gekennzeichnet, dass**
die Füllung unter Anwendung von Ultraschall eingerüttelt ist, wobei hierdurch eine reproduzierbare Verdichtung des Füllmaterials erfolgt.

10. Hochtemperaturmesssensoranordnung nach einem der Ansprüche 8 oder 9,
**dadurch gekennzeichnet, dass**
die Füllung mindestens zwei senkrecht zur Längsachsenrichtung verlaufende Schichten aufweist, wobei eine erste, die Messperle umgebende Schicht eine hohe Wärmeleitfähigkeit und eine zweite, von der Messperle weg weisende Schicht eine reduzierte Wärmeleitfähigkeit besitzt.

11. Hochtemperaturmesssensoranordnung nach einem der Ansprüche 8 bis 10,
**dadurch gekennzeichnet, dass**
das Füllmaterial Bornitrid enthält, wobei durch gezieltes Ausrichten der Bornitrid-Partikel beim Füllprozess oder im unmittelbaren Anschluss an diesen die Richtung der Wärmeleitung zur Messperle hin einstellbar ist.

12. Hochtemperaturmesssensoranordnung nach einem der vorangegangenen Ansprüche,
**dadurch gekennzeichnet, dass**
die Abdichtung an der kalten Seite durch Einblasen oder Vergießen mit einem selbsthärtenden Material erfolgt.

## Claims

1. High-temperature measurement sensor assembly comprising a sensor element supported in a protective tube (1) and having a measuring bead (2) exposed at the end of the protective tube (1) and oriented toward the hot side, and opposing terminals facing toward the cold side, furthermore having a protective cap (4) surrounding the measuring bead (2) and connected to the protective tube (1), and an external stabilizing and fastening sleeve (5),
**characterized in that**
the external stabilizing and fastening sleeve (5), at its end facing toward the protective cap, is in contact with a contour body (7) made of a high-quality, temperature-stable metallic material, wherein the contour body (7) covers and stabilizes the protective cap (4) against vibrational forces, on the one hand, and thermally conditioned expansions in the direction of the longitudinal axis are absorbed by a joining connection between the contour body (7) and the external stabilizing and fastening sleeve (5), on the other.

2. High-temperature measurement sensor assembly according to claim 1,
**characterized in that**
the joining connection is realized via the opposing lateral surfaces.

3. High-temperature measurement sensor assembly according to claim 1 or 2,
**characterized in that**
the joining connection allows sliding between the protective cap and the inner wall of the contour body and/or the outer wall of the contour body and the stabilizing and fastening sleeve.

4. High-temperature measurement sensor assembly according to any one of the preceding claims,
**characterized in that**
the contour body comprises protrusions and setbacks on the radial circumferential or axial circumferential side.

5. High-temperature measurement sensor assembly according to any one of the preceding claims,
**characterized in that**
the contour body comprises openings for the entry of the medium to be measured.

6. High-temperature measurement sensor assembly according to any one of the preceding claims,
**characterized in that**
the protective cap comprises a substantially cylindrical end portion which plunges into a complementary cylindrical end portion of the contour body.

7. High-temperature measurement sensor assembly according to claim 6,
**characterized in that**
the respective cylindrical end portions have a reduced diameter of minimized heat capacity.

8. High-temperature measurement sensor assembly according to any one of the preceding claims,
**characterized in that**
the protective cap comprises a filling of a vibration-stabilizing, heat-conductive, preferably powdery material.

9. High-temperature measurement sensor assembly according to claim 8,
**characterized in that**
the filling is vibrocompacted under application of ultrasound, wherein a reproducible compaction of the filling material is hereby performed.

10. High-temperature measurement sensor assembly according to any one of claims 8 or 9,
**characterized in that**
the filling comprises at least to layers extending perpendicular to the direction of the longitudinal axis, wherein a first layer surrounding the measuring bead has a high heat conductivity, and a second layer facing away from the measuring bead has a reduced heat conductivity.

11. High-temperature measurement sensor assembly according to any one of claims 8 to 10,
**characterized in that**
the filling material contains boron nitride, wherein the direction of the heat conduction to the measuring bead is adjustable by targeted orienting the boron nitride particles during the filling process or immediately following same.

12. High-temperature measurement sensor assembly according to any one of the preceding claims,
**characterized in that**
the sealing on the cold side is performed by injecting or casting a self-curing material.

## Revendications

1. Agencement de mesure pour hautes températures, comprenant un élément capteur monté dans un tube protecteur (1) avec une perle de mesure (2) disposée librement à l'extrémité du tube protecteur (1) et orientée vers le côté chaud, et des connexions opposées, dirigées vers le côté froid, et comprenant en outre un capuchon protecteur (4) qui entoure la perle de mesure (2) et qui est relié avec le tube protecteur (1), et une douille de stabilisation et de fixation extérieure (5),
**caractérisé en ce que**
la douille de stabilisation et de fixation extérieure (5) est, à son extrémité tournés vers le capuchon protecteur, en contact avec un corps contouré (7), qui est constitué en un matériau métallique de haute qualité et stable en températures,
dans lequel le corps contouré (7) coiffe le capuchon protecteur (4) et assure d'une part une stabilisation vis-à-vis de forces dues à des oscillations et permet d'autre part, grâce à une liaison assemblée entre le corps contouré (7) et la douille de stabilisation et de fixation extérieure (5), d'encaisser des dilatations thermiques en direction de l'axe longitudinal.

2. Agencement de mesure pour hautes températures selon la revendication 1,
**caractérisé en ce que** la liaison assemblée est réalisée via les surfaces enveloppe opposées.

3. Agencement de mesure pour hautes températures selon la revendication 1 ou 2,
**caractérisé en ce que** la liaison assemblée permet un coulissement entre le capuchon protecteur et la paroi intérieure du corps contouré et/ou entre la paroi extérieure du corps contouré et la douille de stabilisation et de fixation.

4. Agencement de mesure pour hautes températures selon l'une des revendications précédentes,
**caractérisé en ce que** le corps contouré comporte des saillies et/ou des ressauts radialement du côté de sa périphérie ou axialement du côté de sa périphérie.

5. Agencement de mesure pour hautes températures selon l'une des revendications précédentes,
**caractérisé en ce que** le corps contouré comporte des ouvertures pour l'accès du milieu à mesurer.

6. Agencement de mesure pour hautes températures selon l'une des revendications précédentes,
**caractérisé en ce que** le capuchon protecteur comprend une portion terminale sensiblement cylindrique, qui plonge dans une portion terminale cylindrique complémentaire du corps contouré.

7. Agencement de mesure pour hautes températures selon la revendication 6,
**caractérisé en ce que** les portions terminales cylindriques respectives ont un diamètre réduit avec une capacité thermique minimisée.

8. Agencement de mesure pour hautes températures selon l'une des revendications précédentes,
**caractérisé en ce que** le capuchon protecteur comprend un remplissage d'un matériau stabilisant les vibrations, conducteur thermique, et de préférence sous forme de poudre.

9. Agencement de mesure pour hautes températures selon la revendication 8,
**caractérisé en ce que** le remplissage est secoué en appliquant des ultrasons, et grâce à cela il se produit un compactage reproductible du matériau de remplissage.

10. Agencement de mesure pour hautes températures selon l'une des revendications 8 ou 9,
**caractérisé en ce que** le remplissage comporte au moins deux couches s'étendant perpendiculairement à la direction de l'axe longitudinal, de sorte qu'une première couche qui entoure la perle de mesure possède une forte conductivité thermique et qu'une seconde couche détournée de la perle de mesure possède une conductivité thermique réduite.

11. Agencement de mesure pour hautes températures selon l'une des revendications 8 à 10,
**caractérisé en ce que** le matériau de remplissage contient du nitrure de bore, et par orientation ciblée des particules de nitrure de bore lors du processus de remplissage ou immédiatement à la suite de ce processus, la direction de la conductivité thermique vers la perle de mesure est susceptible d'être réglée.

12. Agencement de mesure pour hautes températures selon l'une des revendications précédentes,
**caractérisé en ce que** le compactage a lieu sur le côté froid par soufflage ou par enrobage avec un matériau auto-durcissant.
